# EUROPEAN PATENT SPECIFICATION

(11) **EP 2 377 700 B1**
(45) Date of publication and mention of the grant of the patent: **05.06.2013**
(21) Application number: 11162759.2
(22) Date of filing: 15.04.2011
(51) Int. Cl.: B60G 21/06, B62D 61/10, B62D 63/06

(54) **Method for forming a modular convoy for outsize loads, modular convoy and trailer for such a convoy**
Verfahren zur Zusammensetzung von einem modularen Convoy für ausladende Lasten, modularer Convoy und Anhänger dafür
Méthode pour former un convoi exceptionnel modulaire, convoi exceptionnel et remorque pour un tel convoi

(30) Priority: 15.04.2010 IT TO20100307
(43) Date of publication of application: 19.10.2011
(73) Proprietor: Industrie Cometto S.p.A., 12011 Borgo San Dalmazzo (IT)
(72) Inventor: Ghinamo, Paolo, 12012 Boves (IT); Terzuolo, Pierluigi, 12100 Cuneo (IT)
(74) Representative: Bergadano, Mirko

(56) References cited:
- EP-A2- 0 864 485
- DE-A1- 2 851 324
- FR-A1- 2 284 471
- GB-A- 1 276 179
- US-A- 3 356 954
- US-A- 4 494 766
- US-A- 4 943 078
- US-B1- 6 371 505
- US-B1- 7 159 888

## Description

The present invention relates to a modular convoy for outsize loads.

In the field of transportation by means of tyred vehicles, using modular convoys for outsize loads is known. These convoys are formed each time according to the specific loading needs by arranging side-by-side and/or aligning a plurality of single tyred trailers equal to one another, so as to form a desired loading surface.

Each trailer is integrally connected to the trailers adjacent thereto and comprises a plurality of corresponding hydraulic suspensions equal to one another and to the transmissions of the other trailers and each comprising its own mechanical lever transmission and a dedicated, simple-acting hydraulic actuator of plunger type for exerting or relieving a determined load support action on/from the ground.

There are today various types of hydraulic suspensions which differ from one another for the type of mechanical transmission used and, in particular, for the geometric features of the transmission, as disclosed, for example, in EP 0 864 485 A2, in US 7 159 888 B1, in DE-C-2851324 and US-A-3356954.

Over time, suspensions and corresponding trailers have developed in terms of performance, and consequently today trailers even very different from one another with regards to the maximum transportable load are available. Precisely because these trailers are provided with mutually different suspensions, they may not be hydraulically connected to the same feeding line or circuit, and therefore may not be arranged side-by-side or combined to one another to make a single convoy. The connection of different suspensions to the same hydraulic line would produce different support actions from one point to another of the convoy, thus making the convoy itself unstable and difficult to be controlled.

Therefore, in order to form a convoy with a high number of trailers, it is often indispensable to purchase new trailers having the same features as a group of trailers already available despite the availability of next-generation, high-performance trailers.

It is the object of the present invention to provide a modular convoy for outsize loads, the features of which allow mutually different trailers to be used.

According to the present invention, a method is provided for forming a modular convoy for the transportation of a defined load, as claimed in Claimed in Claim 1.

Furthermore, the present invention relates to a modular convoy for outsize loads.

According to the present invention, a modular convoy for outsize loads is provided, as claimed in Claim 2.

The present invention is further relative to a trailer for forming a modular convoy for outsize loads, as claimed in Claim 5.

The invention will now be described with reference to the accompanying drawings which show a non-limitative embodiment thereof, in which:
figure 1 diagrammatically shows a plan view of a preferred embodiment of a modular convoy for outsize loads according to the present invention;
figure 2 diagrammatically shows an elevation side view, substantially in blocks, of the convoy in figure 1; and
figure 3 shows a detail of figure 2 on enlarged scale.

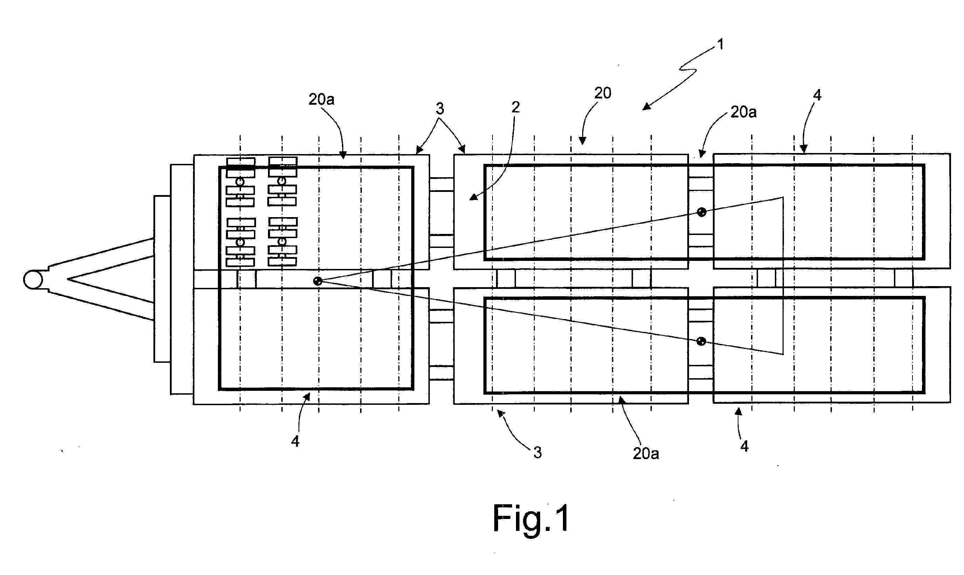

In figure 1, numeral 1 indicates as a whole a modular convoy for outsize loads having a loading surface 2.

In the particular example shown, convoy 1 comprises a plurality of tyred trailers 3 and a plurality of tyred trailers 4, stably connected to one another and to trailers 3 in a known manner, and different from trailers 3 in terms of maximum transportable load. In other words, trailers 4 are an evolution of trailers 3 and therefor have a maximum transportable load per surface unit which is greater than that of the trailers 3 themselves.

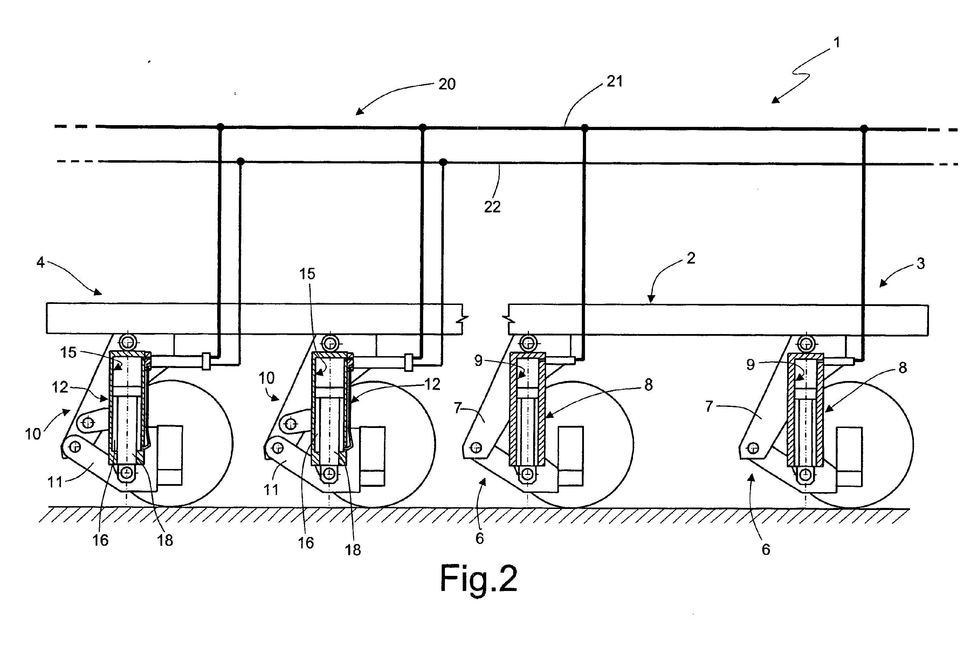

With reference to figure 1, and in particular to figure 2, each trailer 3 comprises a plurality of respective hydraulic compass-like suspensions 6, which are equal to one another, are distributed under the load surface of the corresponding trailer 3, and each comprises a corresponding mechanical lever transmission 7, known per se, and a corresponding simple-acting linear hydraulic actuator of the plunger type, indicated by numeral 8 and having a chamber 9.

Each trailer 4 comprises, instead, a plurality of respective hydraulic suspensions 10 equal to one other but, in this specific case both from the structural and from the geometric point of view, different from the transmissions 7, as shown in figure 2. Suspensions 10 are also distributed under the loading surface of the corresponding trailer 4 and each comprises a corresponding mechanical compass-like transmission 11, known per se and not described in detail, and a corresponding linear hydraulic actuator 12.

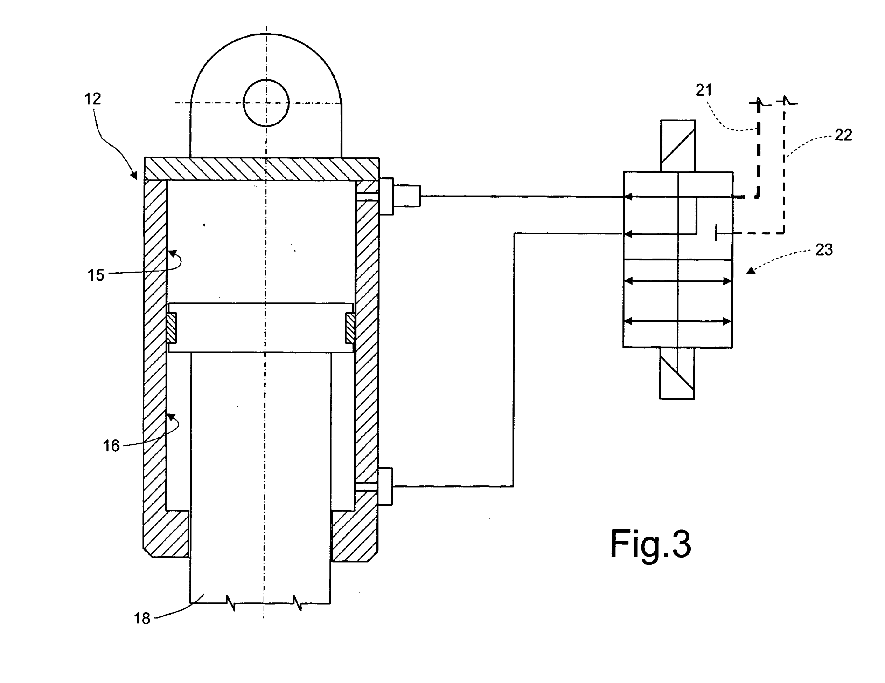

Each linear hydraulic actuator 12 is a double-acting actuator and has a bore substantially equal to or greater than that of the linear actuators 9 and two chambers (large acting and small acting) indicated by numerals 15 and 16 (figure 3), of which chamber 16 is an annular chamber crossed by an outlet rod 18 of the corresponding actuator 12.

Actuators 9 and 12 are connected to a hydraulic network 20 (figure 2) which, in the particular example described, extends through trailers 3 and 4, and comprises three mutually independent, closed hydraulic circuits 20a, each of which comprises, in turn, a closed feeding line 21 for a fluid at a variable pressure from 250 to 300 bars, and a closed discharge line 22, and for each of the actuators 12, a corresponding bistable connection valve 23, shown in figure 3.

With reference to figures 2 and 3, chambers 9 and 15 of actuators 8 and 12 are stably connected to line 21, regardless of the position of valve 23, while the annular chambers 16 of actuators 12 are connected to the feeding line 21 or to the discharge line 22 depending on the switching position of valve 23.

When chambers 16 are connected to the discharge line 22, the corresponding actuator 12 acts as a common plunger cylinder, like that of suspensions 6, while when chambers 16 are connected to the feeding line 21, suspensions 10 act under a "chocking" or reduced pressure mode. Under such a condition, indeed, the action exerted on the ground by each of the suspensions 10 is lower than the action exerted on the ground when chambers 16 are connected to line 22, the chambers 15 and 16 being fed with a fluid at the same pressure.

The reduction effect of the action exerted on the ground is directly correlated to the diameter of rods 18; such a diameter is calculated from the condition in which each of the suspensions 10 exerts or relieves on/from the ground an action which is substantially equal to that of suspensions 6. From such a condition, the diameter of rods 18 is calculated by practically considering the distances between the various restraint points of the transmission and the various hinging points of the actuator and of the respective wheels of the transmission, and placing the condition that the actions exerted on the ground are equal to those of the transmissions 6.

Thereby, trailers 4 are "adapted" to trailers 3. Indeed, the connection between both chambers 15 and 16 of actuators 10 to the feeding line 21 reduces, in practice, the thrust of actuator 12 with respect to the conditions in which chamber 16 is connected to the discharge line 22, and the value of the diameter of rods 18 determines the entity of such a variation. Thereby, trailers 4 are used under "declassed" or "depowered" condition but this allows them to be coupled to trailers having different suspensions to obtain large convoys without needing to purchase new trailers having the same suspensions as the trailers which are already available.

From the above, it is apparent that changes and variations may be made to the described convoy 1 and trailers 3 and 4 without departing from the scope of protection defined by the independent claims.

In particular, it is apparent that the value of the action exerted on the ground may be varied by using, for example, two simple-acting hydraulic actuators exerting antagonist forces, or by using double-acting actuators but varying the pressure in chambers 16, instead of each double-acting actuators.

## Claims

1. A method for forming a modular convoy (1) for the transportation of a defined load, the method comprising the steps of connecting a first (3) and at least a second tyred trailer (4) comprising first (6) and, respectively, second hydraulic suspensions (10) different from said first hydraulic suspensions (6); each of said first and second hydraulic suspensions being adapted to exert on the ground a first and, respectively, a second support action of said load greater than said first support action and comprising a first (8) and, respectively, a second linear hydraulic actuator (12); the connection of said first (3) and second trailers (4) comprising the step of reducing each said second support action of the load so as to bring it to a value substantially equivalent to that of said first support action of the load; said reduction being carried out by exerting for each said second actuator (12) a corresponding action counteracting that exerted by said second actuator to exert on the ground the corresponding said second support action, said counteracting action being carried using for each said second hydraulic actuator, another corresponding linear hydraulic actuator (16).

2. A modular convoy (1) for outsize loads comprising a first (3) and at least a second tyred trailer (4), the first trailer comprising first hydraulic suspensions (6), each comprising a first lever transmission (7) and a first linear hydraulic actuator (8) and being adapted to exert on the ground a first support action of the load; the second trailer (4) comprising second hydraulic suspensions (10) different from said first hydraulic suspensions (6) and each comprising a second mechanical lever transmission (11) and a second linear hydraulic actuator (12) and being adapted to exert on the ground a second support action of the load greater than said first support action; a common hydraulic (21) line for feeding a pressurized fluid to said first (10) and second linear hydraulic actuators (12), and thrust reducing means associated to said second hydraulic actuators (12) to reduce each said second support action to a value substantially equivalent to that of said first support action,
said thrust reducing means comprising, for each said second hydraulic actuator, another corresponding linear hydraulic actuator (16) to exert a force counteracting that exerted by the corresponding said second hydraulic actuator to exert the corresponding said second support action.

3. The convoy according to claim 2, **characterized in that** said first hydraulic actuators (8) are simple-acting linear actuators and **in that** each said second hydraulic actuator and the corresponding said further hydraulic actuator form part of a double-acting linear actuator (12); the chambers (9,15,16) of each of said first hydraulic actuators and of said double-acting hydraulic actuators all being connected in parallel to said common feeding hydraulic line (21).

4. The convoy according to clam 3, **characterized by** further comprising for each said second trailer (4), a discharge line (22) and switchable valve means (23) to stably connect a first chamber (15) of each said second double-acting hydraulic actuator (12) to said common feeding hydraulic line (21) and a second chamber (16) of each said second double-acting hydraulic actuator (12) selectively to said common feeding hydraulic line (21) and to said discharge line (22).

5. A trailer (4) for forming a modular convoy (1) for outsize loads, the trailer (4) comprising a plurality of hydraulic suspensions (10) each comprising a corresponding mechanical lever transmission (11) and a corresponding hydraulic actuator (12) and thrust reducing means associated to said hydraulic actuator (12) to reduce the value of a support action of the load exerted on the ground by said suspension (10); said thrust reducing means comprising a further hydraulic actuator (16) associated to each said hydraulic actuator to exert a force counteracting that exerted by the corresponding said hydraulic actuator to exert said support action on the ground.

6. The trailer according to claim 5, **characterised in that** said actuator and said further actuator form part of a single double-acting actuator (12); the trailer also comprising a closed feeding hydraulic line (21) of said linear actuators, a closed discharge hydraulic line (22) and switchable valve means (23) interposed between said lines and said double-acting actuators for connecting a first chamber (15) with a larger section of said double-acting actuator (12) to said feeding hydraulic line (21) and a second chamber (16) with a smaller section of said double-acting actuator (12) selectively to said feeding hydraulic line (21) and to said discharge line (22).

7. The trailer according to claim 6, **characterized in that** said switchable valve means (23) comprises, for each said double-acting linear hydraulic actuator, a respective switching valve independent of other switching valves.

## Patentansprüche

1. Verfahren zum Bilden eines modularen Konvois (1) für den Transport einer definierten Last, wobei das Verfahren die folgenden Schritte umfasst:
Verbinden eines ersten (3) und wenigstens eines zweiten mit Reifen versehenen Anhängers (4), die erste (6) bzw. zweite hydraulische Aufhängungen (10), die von den ersten hydraulischen Aufhängungen (6) verschieden ist, enthalten; wobei die ersten und zweiten hydraulischen Aufhängungen dafür ausgelegt sind, auf den Boden eine erste Lastunterstützungswirkung bzw. eine zweite Lastunterstützungswirkung, die größer als die erste Unterstützungswirkung ist, auszuüben und einen ersten (8) bzw. einen zweiten linearen Hydraulikaktor (12) enthalten; wobei das Verbinden des ersten Anhängers (3) und des zweiten Anhängers (4) den Schritt des Reduzierens jeder zweiten Lastunterstützungswirkung umfasst, um sie auf einen Wert zu bringen, der zu jener der ersten Lastunterstützungswirkung im Wesentlichen äquivalent ist; wobei das Reduzieren ausgeführt wird durch Ausüben einer entsprechenden Wirkung für jeden zweiten Aktor (12), die jener entgegenwirkt, die von diesem zweiten Aktor ausgeübt wird, um auf den Boden die entsprechende zweite Unterstützungswirkung auszuüben, wobei die Gegenwirkung unter Verwendung eines weiteren entsprechenden linearen Hydraulikaktors (16) für jeden zweiten Hydraulikaktor getragen wird.

2. Modularer Konvoi (1) für übergroße Lasten, der einen ersten (3) und wenigstens einen zweiten Anhänger (4), die mit Reifen versehen sind, wobei der erste Anhänger erste hydraulische Aufhängungen (6) enthält, wovon jede eine erste Hebelkraftübertragung (7) und einen ersten linearen Hydraulikaktor (8) enthält und dafür ausgelegt ist, auf den Boden eine erste Lastunterstüfizungswirkung ausüben; der zweite Anhänger (4) zweite hydraulische Aufhängungen (10) enthält, die von den ersten hydraulischen Aufhängungen (6) verschieden sind und jeweils eine zweite mechanische Hebelkraftübertragung (11) und einen zweiten linearen Hydraulikaktor (12) enthalten und dafür ausgelegt sind, auf den Boden eine zweiten Lastunterstützungswirkung auszuüben, die größer ist als die erste Unterstützungswirkung; und eine gemeinsame Hydraulikleitung (21), um mit Druck beaufschlagtes Fluid den ersten (10) und den zweiten linearen Hydraulikaktoren (12) zuzuführen, und Schubreduzierungsmittel, die den zweiten Hydraulikaktoren (12) zugeordnet sind, um jede zweite Unterstützungswirkung auf einen Wert zu reduzieren, der im Wesentlichen zu jenem der ersten Unterstützungswirkung äquivalent ist, umfasst,
wobei die Schubreduzierungsmittel für jeden zweiten Hydraulikaktor einen weiteren entsprechenden linearen Hydraulikaktor (16) enthalten, um eine Kraft auszuüben, die jener entgegenwirkt, die durch den entsprechenden zweiten Hydraulikaktor ausgeübt wird, um die entsprechende zweite Unterstützungswirkung auszuüben.

3. Konvoi nach Anspruch 2, **dadurch gekennzeichnet, dass** die ersten Hydraulikaktoren (8) einfach wirkende lineare Aktoren sind und dass jeder zweite Hydraulikaktor und der entsprechende weitere Hydraulikaktor einen Teil eines doppelt wirkenden linearen Aktors (12) bilden; wobei alle Kammern (9, 15, 16) jedes ersten Hydraulikaktors und des doppelt wirkenden Hydraulikaktors parallel zu der gemeinsamen Hydraulikzufuhrleitung (21) angeschlossen sind.

4. Konvoi nach Anspruch 3, ferner **dadurch gekennzeichnet, dass** er für jeden zweiten Anhänger (4) eine Entleerungsleitung (22) und schaltbare Ventilmittel (23) umfasst, um eine erste Kammer (15) jedes zweiten doppelt wirkenden Hydraulikaktors (12) mit der gemeinsamen Hydraulikzufuhrleitung (21) und eine zweite Kammer (16) jedes zweiten doppelt wirkenden Hydraulikaktors (12) wahlweise mit der gemeinsamen Hydraulikzufuhrleitung (21) und mit der Entleerungsleitung (22) stabil zu verbinden.

5. Anhänger (4) zum Bilden eines modularen Konvois (1) für übergroße Lasten, wobei der Anhänger (4) mehrere Hydraulikaufhängungen (10) umfasst, wovon jede eine entsprechende mechanische Hebelkraftübertragung (11) und einen entsprechenden Hydraulikaktor (12) sowie Schubreduzierungsmittel, die dem Hydraulikaktor (12) zugeordnet sind, um den Wert einer Unterstützungswirkung der Last, die durch die Aufhängung (10) auf den Boden ausgeübt wird, zu reduzieren, umfasst; wobei die Schubreduzierungsmittel einen weiteren Hydraulikaktor (16) umfassen, der jedem Hydraulikaktor zugeordnet ist, um eine Kraft auszuüben, die jener entgegenwirkt, die durch den entsprechenden Hydraulikaktor ausgeübt wird, um die Unterstützungswirkung auf den Boden auszuüben.

6. Anhänger nach Anspruch 5, **dadurch gekennzeichnet, dass** der Aktor und der weitere Aktor einen Teil eines einzelnen doppelt wirkenden Aktors (12) bilden; wobei der Anhänger außerdem eine geschlossene Hydraulikzufuhdeitung (21) der linearen Aktoren, eine geschlossene Hydraulikentleerungsleitung (22) und schaltbare Ventilmittel (23), die zwischen den Leitungen und den doppelt wirkenden Aktoren eingefügt sind, um eine erste Kammer (15) mit größerem Querschnitt des doppelt wirkenden Aktors (12) mit der Hydraulikzufuhrleitung (21) zu verbinden und eine zweite Kammer (16) mit kleinerem Querschnitt des doppelt wirkenden Aktors (12) wahlweise mit der Hydraulikzufuhrleitung (21) und mit der Entleerungsleitung (22) zu verbinden, umfasst.

7. Anhänger nach Anspruch 6, **dadurch gekennzeichnet, dass** die schaltbaren Ventilmittel (23) für jeden doppelt wirkenden linearen Hydraulikaktor ein entsprechendes Schaltventil, das von anderen Schaltventilen unabhängig ist, umfassen.

## Revendications

1. Procédé pour former un convoi modulaire (1) pour le transport d'une charge définie, le procédé comprenant les étapes consistant à raccorder une première (3) et au moins une seconde remorque (4) sur pneus comprenant des premières (6) et secondes suspensions hydrauliques (10), respectivement, différentes desdites premières suspensions hydrauliques (6), chacune desdites premières et secondes suspensions hydrauliques étant adaptée pour exercer sur le sol une première et, respectivement, une seconde action de support de ladite charge supérieure à ladite première action de support et comprenant un premier (8) et, respectivement, un second actionneur hydraulique linéaire (12) ; le raccordement desdites première (3) et seconde remorques (4) comprenant l'étape consistant à réduire chaquedite seconde action de support de la charge afin de l'amener à une valeur sensiblement équivalente à celle de ladite première action de support de la charge ; ladite réduction étant réalisée en exerçant pour chacun desdits seconds actionneurs (12), une action correspondante s'opposant à celle exercée par ledit second actionneur pour exercer, sur le sol, ladite seconde action de support correspondante, ladite action d'opposition étant réalisée en utilisant pour chacun desdits seconds actionneurs hydrauliques, un autre actionneur hydraulique linéaire (16) correspondant.

2. Convoi modulaire (1) pour charges hors gabarit comprenant une première (3) et au moins une seconde remorque (4) sur pneus, la première remorque comprenant des premières suspensions hydrauliques (6), chacune comprenant une première transmission à levier (7) et un premier actionneur hydraulique linéaire (8), et étant adaptée pour exercer, sur le sol, une première action de support de la charge ; la seconde remorque (4) comprenant des secondes suspensions hydrauliques (10) différentes desdites premières suspensions hydrauliques (6) et chacune comprenant une seconde transmission par levier mécanique (11) et un second actionneur hydraulique linéaire (12) et étant adaptée pour exercer, sur le sol, une seconde action de support de la charge supérieure à ladite première action de support ; une conduite hydraulique commune (21) pour amener un fluide sous pression auxdits premier (10) et second actionneurs hydrauliques (12), et des moyens de réduction de poussée associés auxdits seconds actionneurs hydrauliques (12) afin de réduire chaquedite seconde action de support à une valeur sensiblement équivalente à celle de ladite première action de support,
lesdits moyens de réduction de poussée comprenant, pour chacun desdits seconds actionneurs hydrauliques, un autre actionneur hydraulique linéaire (16) correspondant pour exercer une force s'opposant à celle exercée par ledit second actionneur hydraulique correspondant pour exercer ladite seconde action de support correspondante.

3. Convoi selon la revendication 2, **caractérisé en ce que** lesdits premiers actionneurs hydrauliques (8) sont des actionneurs linéaires à simple effet, et **en ce que** chacun desdits seconds actionneurs hydrauliques et ledit actionneur hydraulique supplémentaire correspondant font partie d'un actionneur linéaire (12) à double effet ; les chambres (9, 15, 16) de chacun desdits premiers actionneurs hydrauliques et desdits actionneurs hydrauliques à double effet étant raccordées en parallèle à ladite conduite hydraulique d'alimentation commune (21).

4. Convoi selon la revendication 3, **caractérisé en ce qu'**il comprend en outre, pour chaquedite seconde remorque (4), une conduite de décharge (22) et des moyens de soupape variable (23) pour raccorder de manière stable une première chambre (15) de chaquedit second actionneur hydraulique à double effet (12) à ladite conduite hydraulique d'alimentation (21) commune et une seconde chambre (16) de chaquedit second actionneur hydraulique à double effet (12) sélectivement à ladite conduite hydraulique d'alimentation (21) commune et à ladite conduite de décharge (22).

5. Remorque (4) pour former un convoi modulaire (1) pour charges hors gabarit, la remorque (4) comprenant une pluralité de suspensions hydrauliques (10) comprenant chacune une transmission à levier mécanique (11) correspondant et un actionneur hydraulique (12) correspondant, et des moyens de réduction de poussée associés audit actionneur hydraulique (12) pour réduire la valeur d'une action de support de la charge exercée sur le sol par ladite suspension (10) ; lesdits moyens de réduction de poussée comprenant un actionneur hydraulique (16) supplémentaire associé à chaquedit actionneur hydraulique pour exercer une force s'opposant à celle exercée par ledit actionneur hydraulique correspondant afin d'exercer ladite action de support sur le sol.

6. Remorque selon la revendication 5, **caractérisée en ce que** ledit actionneur et ledit actionneur supplémentaire font partie d'un seul actionneur à double effet (12) ; la remorque comprenant également une conduite hydraulique d'alimentation fermée (21) desdits actionneurs linéaires, une conduite hydraulique de décharge fermée (22) et des moyens de soupape variable (23) intercalés entre lesdits conduites, et lesdits actionneurs à double effet pour raccorder une première chambre (15) avec une plus grande section dudit actionneur à double effet (12) à ladite conduite hydraulique d'alimentation (21) et une seconde chambre (16) avec une plus petite section dudit actionneur à double effet (12) sélectivement à ladite conduite hydraulique d'alimentation (21) et à ladite conduite de décharge (22).

7. Remorque selon la revendication 6, **caractérisée en ce que** lesdits moyens de soupape variable (23) comprennent, pour chaquedit actionneur hydraulique linéaire à double effet, une soupape de commutation respective indépendante des autres soupapes de commutation.
